# EUROPEAN PATENT SPECIFICATION

(11) **EP 4 044 314 B1**
(45) Date of publication and mention of the grant of the patent: **24.09.2025**
(21) Application number: 21775926.5
(22) Date of filing: 23.03.2021
(51) Int. Cl.: H01M 10/0567, H01M 10/0569, H01M 10/052, H01M 4/38, H01M 4/40, H01M 4/58, H01M 10/0568

(54) **ELECTROLYTE FOR LITHIUM-SULFUR BATTERY, AND LITHIUM-SULFUR BATTERY INCLUDING THE SAME**
ELEKTROLYT FÜR LITHIUM-SCHWEFEL-BATTERIE, UND LITHIUM-SCHWEFEL-BATTERIE DENSELBEN UMFASSEND
ÉLECTROLYTE POUR BATTERIE AU LITHIUM-SOUFRE, ET BATTERIE AU LITHIUM-SOUFRE LE COMPRENANT

(30) Priority: 27.03.2020 KR 20200037351; 19.03.2021 KR 20210036050
(43) Date of publication of application: 17.08.2022
(73) Proprietor: LG ENERGY SOLUTION, LTD., Seoul 07335 (KR)
(72) Inventor: JUNG, Unho, Daejeon 34122 (KR); LEE, Jaegil, Daejeon 34122 (KR)
(74) Representative: Hoffmann Eitle
(86) International application number: PCT/KR2021/003594
(87) International publication number: WO 2021/194231

(56) References cited:
- EP-A2- 1 178 555
- WO-A1-2006/059085
- WO-A1-2013/024648
- CN-A- 105 098 248
- JP-A- 2005 251 677
- KR-A- 20030 031 396
- KR-A- 20050 038 895
- KR-A- 20050 038 896
- KR-B1- 101 994 879
- US-A1- 2006 199 080

## Description

### [Technical Field]

The present invention relates to an electrolyte for a lithium-sulfur battery and a lithium-sulfur battery comprising the same.

### [Background Art]

As the application range of lithium secondary batteries is expanded to not only portable electronic devices, but also electric vehicles (EV) and electric storage systems (ESS), the demand for lithium secondary batteries with high capacity, high energy density, and long lifetime is increasing.

Among various lithium secondary batteries, the lithium-sulfur battery is a battery system that uses a sulfur-based material containing a sulfur-sulfur bond as a positive electrode active material, and uses lithium metal, a carbon-based material in which lithium ions are intercalated/de-intercalated, or silicon or tin forming an alloy with lithium as a negative electrode active material.

In the lithium-sulfur battery, there is an advantage that sulfur, which is the main material of the positive electrode active material, has a low atomic weight, is very rich in resources and thus easy to supply and receive, and is cheap, non-toxic and environmentally friendly.

In addition, the lithium-sulfur battery has a theoretical specific capacity of 1,675 mAh/g arising from the conversion reaction of lithium ions and sulfur (S₈+16Li⁺+16e⁻ → 8Li₂S) in the positive electrode, and when using lithium metal as a negative electrode, the lithium-sulfur battery exhibits a theoretical energy density of 2,600 Wh/kg. Since the theoretical energy density of the lithium-sulfur battery has a very high value compared to the theoretical energy density of other battery systems (Ni-MH battery: 450 Wh/kg, Li-FeS battery: 480 Wh/kg, Li-MnO₂ battery: 1,000 Wh/kg, Na-S battery: 800 Wh/kg) and a lithium-ion battery (250 Wh/kg) currently being studied, the lithium-sulfur battery is attracting attention as a high-capacity, eco-friendly, and low-cost lithium secondary battery among secondary batteries being developed to date.

Specifically, in the case of using lithium metal as a negative electrode active material in a lithium-sulfur battery, since the theoretical specific capacity is remarkably high as 3,860 mAh/g, and also the standard reduction potential (Standard Hydrogen Electrode: SHE) is very low as -3.045 V, it is possible to realize a battery with high capacity and high energy density and thus several studies are being conducted as a next-generation battery system.

However, as lithium metal, which is a negative electrode active material, reacts easily with electrolyte due to its high chemical/electrochemical reactivity, a passivation layer is formed on the surface of the negative electrode. Such a passivation layer causes a difference in current density in a local area to form lithium dendrite on the surface of the lithium metal. In addition, the lithium dendrite formed in this way causes a short circuit inside the battery and inert lithium (dead lithium), and thus cause a problem of not only increasing the physical and chemical instability of the lithium secondary battery, but also reducing the capacity of the battery and shortening the cycle lifetime.

Due to the high instability of lithium metal as described above, lithium-sulfur batteries using lithium metal as a negative electrode have not been commercialized.

Accordingly, various methods such as introducing a protective layer on the surface of lithium metal or varying the composition of an electrolyte are being studied.

For example, Korean Patent Publication No. 2016-0034183 describes that the loss of the electrolyte and the generation of the dendrite can be prevented by forming a protective layer as a polymer matrix, which can accumulate an electrolyte while protecting a negative electrode on a negative electrode active layer containing lithium metal or lithium alloy.

In addition, Korean Patent Publication No. 2016-0052351 discloses that by incorporating a lithium dendrite absorbing material into the polymer protective film formed on the surface of the lithium metal, it is possible to suppress the growth of lithium dendrites, thereby improving the stability and lifetime characteristics of the lithium secondary battery.

In addition, Jiangfeng Qian *et al.* and Korean Patent Publication No. 2013-0079126 each disclose that by increasing the concentration of the lithium salt or by incorporating a non-aqueous organic solvent comprising 1,3,5-trioxane, 1,3-dioxolane, and fluorine-based cyclic carbonate, characteristics of a battery comprising lithium metal can be improved.

These prior arts suppressed the reaction between electrolyte and lithium metal or the formation of lithium dendrites to some extent, but the effect is not sufficient. In addition, as the charging/discharging of the battery proceeds, there is a problem that degeneration of the protective layer occurs, such as hardening or swelling of the protective layer. In addition, in the case of using an electrolyte containing a specific component, not only is there a limitation on the applicable battery, but also a problem of deterioration of the performance of the battery may be caused. Therefore, there is still a need to develop a lithium-sulfur battery having excellent capacity and lifetime characteristics by improving the efficiency and stability of the lithium metal negative electrode.

### [Prior Art Document]

### [Patent Document]

Korean Patent Publication No. 2016-0034183 (March 29, 2016), NEGATIVE ELECTRODE FOR RECHARGEABLE LITHIUM BATTERY AND RECHARGEABLE LITHIUM BATTERY COMPRISING SAME

Korean Patent Publication No. 2016-0052351 (May 12, 2016), LITHIUM METAL ELECTRODE FOR LITHIUM SECONDARY BATTERY WITH SAFE PROTECTIVE LAYER AND LITHIUM SECONDARY BATTERY COMPRISING THE SAME

Korean Patent Publication No. 2013-0079126 (July 10, 2013), ELECTROLYTE FOR LITHIUM METAL BATTERY AND LITHIUM METAL BATTERY INCLUDING THE SAME

CN 105098248 A discloses a lithium ion battery electrolyte consisting of an electrolyte lithium salt, a solvent and a high-temperature film-forming additive; the solvent consists of a nitrile solvent and/or an ester solvent and a wide-temperature range cosolvent being an ether compound and/or an alkane compound containing nitro.

WO 2013/024648 A1 discloses a non-aqueous electrolyte containing a vinyl compound having a plurality of terminal double bonds.

US 2006/0199080 A1 provides non-aqueous electrolytes comprising an alkali metal salt; a polar aprotic solvent; and a redox shuttle additive being an aromatic compound having at least one aromatic ring with four or more electronegative substituents, two or more oxygen atoms and no hydrogen atoms bonded to the aromatic ring.

KR 10-2005-0038896 A relates to an electrolyte for lithium-sulfur batteries.

EP 1 178 555 A2 relates to a lithium-sulfur battery including an electrolyte with at least two groups selected from a weak polar solvent group, a strong polar solvent group and a lithium protection solvent group, where at least one or more solvents are selected from the same group.

KR 10-2005-0038895 A relates to an electrolyte for lithium-sulfur batteries.

JP 2005-251677 discloses a nonaqueous electrolyte solution containing a circular sulfonate of formula (1), and unsaturated compounds having a carbon-carbon unsaturated bond and an electron donor group conjugated with the carbon-carbon unsaturated bond.

EP 1 302 997 A2 relates to a lithium-sulfur battery including an electrolyte having salts of an organic cation.

KR 10-1994879 B1 relates to a non-aqueous liquid electrolyte for a lithium-sulfur battery.

WO 2006/059085 A1 discloses an electrolyte for a lithium-sulphur battery, the electrolyte comprising a solution of at least one electrolyte salt in at least two aprotic solvents.

### [Non-Patent Document]

Jiangfeng Qian et al., High rate and stable cycling of lithium metal anode, Nature Communications 2015, 6, 6362

### [Disclosure]

### [Technical Problem]

As a result of conducting various studies to solve the above problems, the inventors of the present invention have confirmed that when an electrolyte for a lithium-sulfur battery comprises an alkyl vinyl ether compound as an additive, the efficiency and stability of the negative electrode including lithium metal can be improved, thereby improving the capacity and lifetime of the lithium-sulfur battery, and thus have completed the present invention.

Accordingly, it is an object of the present invention to provide an electrolyte for a lithium-sulfur battery capable of implementing a lithium-sulfur battery having excellent capacity and lifetime characteristics.

In addition, it is another object of the present invention to provide a lithium-sulfur battery containing the electrolyte.

### [Technical Solution]

In order to achieve the above objects, the present invention provides an electrolyte for a lithium-sulfur battery comprising a lithium salt, a non-aqueous organic solvent, and an additive, wherein the additive comprises an alkyl vinyl ether compound, and wherein the non-aqueous organic solvent comprises an ether-based compound and a heterocyclic compound including one or more double bonds.

The alkyl vinyl ether compound may be represented by Formula 1 below:

[Formula 1] H₂C=CH-OR

wherein R is as described in the specification.

The alkyl vinyl ether compound may comprise at least one selected from the group consisting of methyl vinyl ether, ethyl vinyl ether, propyl vinyl ether, butyl vinyl ether, isobutyl vinyl ether, pentyl vinyl ether, and hexyl vinyl ether.

The ether-based compound may comprise a linear ether compound.

The heterocyclic compound may comprise at least one hetero atom selected from the group consisting of an oxygen atom and a sulfur atom.

The non-aqueous organic solvent may comprise the ether-based compound and the heterocyclic compound in a volume ratio of 95:5 to 5:95.

The lithium salt may comprise at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, (CF₃SO₂)₂NLi, (C₂F₅SO₂)₂NLi, (SO₂F)₂NLi, (CF₃SO₂)₃CLi, chloroborane lithium, lower aliphatic carboxylic acid lithium having 4 or less carbon atoms, 4-phenylboric acid lithium, and lithium imide.

The alkyl vinyl ether compound may be comprised in an amount of 0.1 to 10% by weight based on a total of 100% by weight of the electrolyte for the lithium-sulfur battery.

In addition, the present invention provides a lithium-sulfur battery containing the electrolyte for the lithium-sulfur battery.

### [Advantageous Effects]

As the electrolyte for the lithium-sulfur battery according to the present invention comprises an alkyl vinyl ether compound as an additive, it is possible to improve the efficiency and stability of the negative electrode comprising lithium metal, as well as maximize the expression of the capacity of the positive electrode, thereby enabling high capacity and long lifetime of the lithium-sulfur battery.

### [Description of Drawings]

FIG. 1 is a graph showing evaluation results of capacity and lifetime characteristics of lithium-sulfur batteries according to Example 1 and Comparative Example 1.
FIG. 2 is a graph showing evaluation results of charging/discharging efficiency of lithium-sulfur batteries according to Example 1 and Comparative Example 1.
FIG. 3 is a graph showing voltage-capacity of a first cycle of lithium-sulfur batteries according to Example 1 and Comparative Example 1.
FIG. 4 is a graph showing evaluation results of capacity and lifetime characteristics of lithium-sulfur batteries according to Example 2 and Comparative Example 1.
FIG. 5 is a graph showing evaluation results of charging/discharging efficiency of lithium-sulfur batteries according to Example 2 and Comparative Example 1.
FIG. 6 is a graph showing voltage-capacity of a first cycle of lithium-sulfur batteries according to Example 2 and Comparative Example 1.

### [Best Model

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" include plural referents unless the context clearly dictates otherwise. It is to be understood that the terms "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

The term "composite" as used herein refers to a material that two or more materials are combined to express a more effective function while forming physically and chemically different phases to each other.

The term "polysulfide" as used herein is a concept comprising both "polysulfide ions (Sₓ²⁻, x = 8, 6, 4, 2))" and "lithium polysulfides (Li₂Sₓ or LiSₓ⁻, x = 8, 6, 4, 2)".

As lithium secondary batteries, which were used in portable electronic devices and remained in the limited market, are rapidly expanding into the market of electric vehicle (EV) and energy storage systems and they are becoming light weight, thin, short, and small, there is also a demand for lighter weight and miniaturization of lithium secondary batteries, which are their operating energy sources.

Since a lithium-sulfur battery exhibits high theoretical discharge capacity and theoretical energy density among several secondary batteries, as well as lithium metal, which is mainly used as a negative electrode active material, has a very small atomic weight (6.94 g/a.u.) and density (0.534 g/cm³), thus the lithium-sulfur battery is in the spotlight as a next-generation battery due to its ease of miniaturization and weight reduction.

However, as mentioned above, lithium metal has high reactivity and thus when the electrolyte and lithium metal are in contact, a passivation film is formed on the surface of the lithium metal due to the spontaneous decomposition of the electrolyte. This reduces the efficiency and stability of the negative electrode by forming inert lithium and lithium dendrites. **In** addition, in a lithium-sulfur battery using a sulfur-based material as a positive electrode active material, the lithium polysulfide (Li₂Sₓ, usually x> 4) with a high oxidation number of sulfur, among the lithium polysulfide (Li₂Sₓ, x = 8, 6, 4, 2) formed in the positive electrode during operation of the battery, is continuously dissolved due to its high solubility in the electrolyte, and leaches out of the reaction zone of the positive electrode, and moves to the negative electrode. At this time, the lithium polysulfide leached from the positive electrode causes a side reaction with the lithium metal, and thus lithium sulfide adheres to the surface of lithium metal, thereby causing the passivation of the electrode, as well as the utilization rate of sulfur is lowered due to the leaching of lithium polysulfide, and thus it is possible to implement only up to about 70% of the theoretical discharging capacity, and as the cycle is proceeded, there is a problem that the capacity and charging/discharging efficiency are rapidly deteriorated, thereby lowing the lifetime characteristic of the battery.

To this end, in the prior art, methods such as introducing a protective layer on the surface of the lithium metal negative electrode, changing the composition of the solvent of the electrolyte, or adding an additive to the electrolyte were used. However, it is not preferable for practical application because it causes serious problems in the performance and operation stability of the battery due to the problem of compatibility with other elements constituting the battery.

Accordingly, the present invention provides an electrolyte for a lithium-sulfur battery capable of implementing a lithium-sulfur battery with improved capacity and lifetime characteristics by improving the efficiency and stability of the negative electrode and maximizing the capacity of the positive electrode active material.

Specifically, the electrolyte for a lithium-sulfur battery according to the present invention comprises a lithium salt, a non-aqueous organic solvent, comprising an ether-based compound and a heterocyclic compound including one or more double bonds, and an additive, wherein the additive comprises an alkyl vinyl ether compound.

**In** the present invention, since the additive is a compound in which a vinyl group and an alkyl group are bonded through an oxygen atom, and exhibits a leveling effect due to affinity with lithium ions, an improved stripping/plating process can be performed on the surface of the lithium metal, which is a negative electrode. Accordingly, since the efficiency and stability of the negative electrode are improved, the capacity and lifetime characteristics of a lithium-sulfur battery comprising the same can be improved. The term "negative electrode efficiency" used in the present invention refers to the percentage of lithium (or other negative electrode active material) replated or re-reduced on the negative electrode, when fully charged, to the amount of lithium newly stripped or oxidized from the negative electrode at the time of the previous full discharging of the battery. Any deviation from 100% indicates inert lithium that has lost utility in charging/discharging the battery.

**In** addition, the additive of the present invention can prevent the lithium polysulfide generated from the positive electrode from reacting with the lithium metal, thereby suppressing the loss of sulfur, which is the positive electrode active material and thus maximizing the expression of the capacity of the positive electrode active material, and thus can implement a lithium-sulfur battery having an implementation rate of superior capacity compared to the theoretical specific capacity.

**In** addition, since the additive of the present invention does not participate in the electrochemical reaction of the battery and only plays a role of improving the efficiency and stability of the negative electrode comprising lithium metal, there is an advantage in that the problem of deterioration in performance of the battery occurring in the prior art does not occur.

As described above, the additive according to the present invention may include an alkyl vinyl ether compound. The alkyl vinyl ether compound may be represented by Formula 1 below:

[Formula 1] H₂C=CH-OR

wherein R is an alkyl group having 1 to 10 carbon atoms.

The alkyl group may be linear or branched, and the number of carbon atoms is not particularly limited, but is preferably 1 to 4. Specific examples comprise methyl group, ethyl group, propyl group, isopropyl group, butyl group, n-butyl group, t-butyl group, isobutyl group, pentyl group, hexyl group, and heptyl group, but are not limited thereto. One or more hydrogen atoms contained in the alkyl group may be optionally substituted with one or more substituents (e.g. alkyl, alkenyl, alkynyl, heterocyclic, aryl, heteroaryl, acyl, oxo, imino, thiooxo, cyano, isocyano, amino, azido, nitro, hydroxyl, thiol, halo, etc.).

The alkyl vinyl ether compound may comprise at least one selected from the group consisting of methyl vinyl ether, ethyl vinyl ether, propyl vinyl ether, butyl vinyl ether, isobutyl vinyl ether, pentyl vinyl ether, and hexyl vinyl ether. Preferably, the alkyl vinyl ether compound may be at least one selected from the group consisting of propyl vinyl ether, butyl vinyl ether, and pentyl vinyl ether, and more preferably, the alkyl vinyl ether compound may be butyl vinyl ether.

The alkyl vinyl ether compound may be comprised in an amount of 0.1 to 10% by weight based on a total of 100% by weight of the electrolyte for the lithium-sulfur battery. The content of the additive may have a lower limit of 0.1% by weight or more, 0.3% by weight or more, or 0.5% by weight, and an upper limit of 10% by weight or less, 2% by weight or less, or 1% by weight or less, based on a total of 100% by weight of the electrolyte for the lithium-sulfur battery. The content of the additive can be set by a combination of the lower limit and the upper limit. When the content of the additive is less than the above range, since it cannot act on all of the lithium ions moving during charging/discharging, the uniformity of the stripping/plating process is deteriorated, and thus a desired effect cannot be obtained. On the contrary, when the content of the additive exceeds the above range, overvoltage may occur, thereby causing problems in normal operation of the battery and thus resulting in loss of capacity or shortening of the lifetime of the battery.

The electrolyte for the lithium-sulfur battery according to the present invention comprises a lithium salt as an electrolyte salt. The type of the lithium salt is not particularly limited in the present invention, and the lithium salt may be used without limitation as long as it is commonly used in an electrolyte for a lithium-sulfur battery.

For example, the lithium salt may comprise at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate having 4 or less carbon atoms, lithium 4-phenyl borate, and lithium imide. Preferably, the lithium salt may be (SO₂F)₂NLi (lithium bis(fluorosulfonyl)imide, LiFSI).

The concentration of the lithium salt may be determined in consideration of ion conductivity, solubility and the like, and may be, for example, 0.1 to 4.0 M, preferably 0.5 to 2.0 M. When the concentration of the lithium salt is less than the above range, it is difficult to ensure ion conductivity suitable for operating the battery. On the other hand, when the concentration exceeds the above range, the viscosity of the electrolyte solution is increased to lower the mobility of the lithium ion and the decomposition reaction of the lithium salt itself may increase to deteriorate the performance of the battery. Therefore, the concentration is adjusted appropriately within the above range.

The electrolyte for the lithium-sulfur battery according to the present invention is a medium through which ions involved in the electrochemical reaction of the lithium-sulfur battery can move, and comprises a non-aqueous organic solvent, which is for dissolving lithium salt.

In the present invention, the non-aqueous organic solvent comprises an ether-based compound and a heterocyclic compound including one or more double bonds.

The ether-based compound secures electrochemical stability within the driving voltage range of the battery, while maintaining the solubility of sulfur or sulfur-based compounds, and has relatively little occurrence of side reactions with intermediate products during the operation of the battery.

The ether-based compound may comprise at least one selected from the group consisting of a linear ether compound and a cyclic ether compound, and preferably may be a linear ether compound.

For example, the linear ether compound may comprise at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether. Preferably, the linear ether compound may comprise at least one selected from the group consisting of dimethoxyethane, ethylene glycol ethylmethyl ether, and diethylene glycol dimethyl ether, and more preferably, may be dimethoxyethane.

For example, the cyclic ether compound may comprise at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

The heterocyclic compound is a heterocyclic compound including at least one double bond, and the heterocycle comprises at least one hetero atom selected from the group consisting of an oxygen atom and a sulfur atom. The heterocyclic compound comprises an oxygen atom or a sulfur atom and exhibits polarity, thereby enhancing affinity with other components in the electrolyte, as well as suppressing side reactions and decomposition of the electrolyte.

The heterocyclic compound may be a 3 to 15 membered, preferably 3 to 7 membered, more preferably a 5 to 6 membered heterocyclic compound.

In addition, the heterocyclic compound may be a heterocyclic compound substituted or unsubstituted by at least one selected from the group consisting of an alkyl group having 1 to 4 carbon atoms, a cyclic alkyl group having 3 to 8 carbon atoms, an aryl group having 6 to 10 carbon atoms, a halogen group, a nitro group (-NO₂), an amine group (-NH₂), and a sulfonyl group (-SO₂); or a multicyclic compound of a heterocyclic compound and at least one selected from the group consisting of a cyclic alkyl group having 3 to 8 carbon atoms and an aryl group having 6 to 10 carbon atoms.

For example, the heterocyclic compound may comprise at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene. Preferably, the heterocyclic compound may comprise at least one selected from the group consisting of 2-methylfuran, 3-methylfuran, and 2,5-dimethylfuran, and more preferably may be 2-methylfuran.

In the present invention, the non-aqueous organic solvent may include the ether-based compound and the heterocyclic compound in a volume ratio of 95:5 to 5:95, preferably 95:5 to 50:50, more preferably 90:10 to 50:50, and most preferably 90:10 to 70:30. In the present invention, the volume ratio corresponds to the ratio of "% by volume of linear ether": "% by volume of heterocyclic compound" in an ether-based solvent. When the ether-based compound and the heterocyclic compound are included in the above-described volume ratio as the non-aqueous organic solvent, it can be effective in terms of prevention of loss of positive electrode active material and deterioration of ionic conductivity of the lithium-sulfur battery. In particular, the heterocyclic compound is preferably contained in a volume ratio of 5 or more relative to the total volume of the non-aqueous organic solvent. When the heterocyclic compound is contained in a volume ratio of less than 5 relative to the total volume of the non-aqueous organic solvent, there may be a problem of accelerating the deterioration of the lifetime due to the leaching of the positive electrode active material.

The electrolyte for the lithium-sulfur battery of the present invention may further comprise nitric acid or a nitrous acid-based compound in addition to the above-described components. The nitric acid or nitrous acid-based compound has the effect of forming a stable film on the lithium electrode and improving the charging/discharging efficiency.

The nitric acid or nitrous acid-based compound is not particularly limited in the present invention, but may be at least one selected from the group consisting of inorganic nitric acid or nitrous acid-based compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₃), potassium nitrite (KNO₂), cesium nitrite (CsNO₂), ammonium nitrite (NH₄NO₂); organic nitric acid or nitrous acid-based compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably may be lithium nitrate.

In addition, the electrolyte of the present invention may further comprise other additives for the purpose of improving charging/discharging characteristics, flame retardancy, and the like. Examples of the additives may be pyridine, triethylphosphite, triethanolamine, cyclic ether, ethylene diamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxy ethanol, aluminum trichloride, fluoroethylene carbonate (FEC), propene sultone (PRS), and vinylene carbonate (VC).

The electrolyte for the lithium-sulfur battery according to the present invention may improve the efficiency and stability of the negative electrode comprising lithium metal by including an alkyl vinyl ether compound as an additive. **In** addition, side reactions between lithium polysulfide and lithium metal generated during the operation of the electrolyte or the lithium-sulfur battery can be effectively suppressed. Accordingly, it is possible to improve the capacity and lifetime of the lithium-sulfur battery comprising the electrolyte of the present invention.

Also, the present invention provides a lithium-sulfur battery comprising the electrolyte for the lithium-sulfur battery, as described above.

The lithium-sulfur battery comprises a positive electrode, a negative electrode, and an electrolyte interposed therebetween, wherein the electrolyte comprises the electrolyte for the lithium-sulfur battery according to the present invention.

The positive electrode may comprise a positive electrode current collector and a positive electrode active material layer coated on one or both sides of the positive electrode current collector.

The positive electrode current collector supports the positive electrode active material and is not particularly limited as long as it has high conductivity without causing chemical change in the battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding force with the positive electrode active material by having fine irregularities on its surface, and may be formed in various forms such as film, sheet, foil, mesh, net, porous body, foam, or nonwoven fabric.

The positive electrode active material layer comprises a positive electrode active material and may further comprise a conductive material, a binder, additives, and the like.

The positive electrode active material may comprise sulfur, and specifically may comprise at least one selected from the group consisting of elemental sulfur (S₈) and a sulfur compound. The positive electrode active material may comprise at least one selected from the group consisting of inorganic sulfur, Li₂Sₙ(n≥1), a disulfide compound, an organic sulfur compound, and a carbon-sulfur polymer ((C₂Sₓ)ₙ, x=2.5 to 50, n≥2). Preferably, the positive electrode active material may be inorganic sulfur.

Sulfur is used in combination with a conductive material such as a carbon material because it does not have electrical conductivity alone. Accordingly, the sulfur is comprised in the form of a sulfur-carbon composite, and preferably, the positive electrode active material may be a sulfur-carbon composite.

The carbon in the sulfur-carbon composite is a porous carbon material and provides a framework capable of uniformly and stably immobilizing sulfur, which is a positive electrode active material, and supplements the low electrical conductivity of sulfur to enable the electrochemical reaction to proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porous carbon material. When the average diameter of the pores is less than the above range, the pore size is only at the molecular level and impregnation with sulfur is impossible. On the contrary, when the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); graphites such as natural graphite, artificial graphite, and expanded graphite, and activated carbon. Preferably, the porous carbon material may be carbon nanotubes.

The sulfur-carbon composite may comprise 60 to 90 parts by weight, preferably 65 to 85 parts by weight, more preferably 70 to 80 parts by weight of sulfur, based on 100 parts by weight of the sulfur-carbon composite. When the content of sulfur is less than the above-described range, as the content of the porous carbon material in the sulfur-carbon composite is relatively increased, the specific surface area is increased, so that the content of the binder is increased during the manufacture of the positive electrode. The increase in the amount of the binder used may eventually increase the sheet resistance of the positive electrode and act as an insulator to prevent electron pass, thereby deteriorating the performance of the battery. On the contrary, when the content of sulfur exceeds the above range, sulfur that cannot be combined with the porous carbon material agglomerates between them or re-leaches to the surface of the porous carbon material, and thus becomes difficult to receive electrons and cannot participate in electrochemical reactions, resulting in loss of the capacity of the battery.

In addition, the sulfur in the sulfur-carbon composite is located on at least one of the inner and outer surfaces of the aforementioned porous carbon material, and at this time, may be present in an area of less than 100%, preferably 1 to 95%, more preferably 60 to 90% of the entire inner and outer surfaces of the porous carbon material. When sulfur is present on the inner and outer surfaces of the porous carbon material within the above range, it can show the greatest effect in terms of the electron transfer area and the wettability with the electrolyte. Specifically, since sulfur is thinly and evenly impregnated on the inner and outer surfaces of the porous carbon material in the above range, the electron transfer contact area may be increased during the charging/discharging process. When the sulfur is located in the area of 100% of the entire inner and outer surface of the porous carbon material, the carbon material is completely covered with sulfur, thereby resulting in poor wettability to the electrolyte and has poor contact with the conductive material contained in the electrode and thus cannot receive electrons and cannot participate in the electrochemical reaction.

The method for preparing the sulfur-carbon composite is not particularly limited in the present invention, and a method commonly used in the art may be used. For example, a method of simply mixing sulfur and the porous carbon material and then heat-treating them to form a composite may be used.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group IIIA element may comprise Al, Ga, In, Tl and the like, and the group IVA element may comprise Ge, Sn, Pb, and the like.

The positive electrode active material may be included in an amount of 40 to 95% by weight, preferably 45 to 90% by weight, more preferably 60 to 90% by weight based on a total of 100% by weight of the positive electrode active material layer constituting the positive electrode. When the content of the positive electrode active material is less than the above range, it is difficult for the positive electrode to sufficiently exert an electrochemical reaction. On the contrary, when the content exceeds the above range, there is a problem that the resistance of the positive electrode is increased and the physical properties of the positive electrode are lowered due to a relatively insufficient content of the electrically conductive material and the binder to be described later.

The positive electrode active material layer may optionally further comprise a conductive material, which allows electrons to move smoothly within the positive electrode (specifically, positive electrode active material), and a binder for well attaching the positive electrode active material to the current collector.

The conductive material is a material that acts as a path, through which electrons are transferred from the current collector to the positive electrode active material, by electrically connecting the electrolyte and the positive electrode active material.

For example, as the conductive material, graphite such as natural graphite or artificial graphite; carbon blacks such as Super P, Denka black, acetylene black, Ketjen black, channel black, furnace black, lamp black, and thermal black; carbon derivatives such as carbon nanotubes and fullerene; electrically conductive fibers such as carbon fiber and metal fiber; carbon fluoride; metal powders such as aluminum and nickel powder or electrically conductive polymers such as polyaniline, polythiophene, polyacetylene, and polypyrrole may be used alone or in combination.

The conductive material may be contained in an amount of 1 to 10% by weight, preferably 4 to 7% by weight, based on a total of 100% by weight of the positive electrode active material layer constituting the positive electrode. When the content of the electrically conductive material is less than the above range, since electron transfer between the positive electrode active material and the current collector is not easy, voltage and capacity are reduced. On the contrary, when the content exceeds the above range, the proportion of the positive electrode active material is relatively reduced, so that the total energy (charge) of the battery can be reduced. Therefore, it is desirable to determine an appropriate content within the above-described range.

The binder maintains the positive electrode active material in the positive electrode current collector and organically connects the positive electrode active material to further increase the binding force therebetween, and any binder known in the art can be used as the binder.

For example, the binder may be any one selected from the group consisting of fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxy methyl cellulose (CMC), starch, hydroxypropyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The content of the binder may be 1 to 10% by weight based on a total of 100% by weight of the positive electrode active material layer constituting the positive electrode. When the content of the binder is less than the above range, the physical properties of the positive electrode may be deteriorated and thus positive electrode active material and the electrically conductive material can be broken away. When the content of the binder exceeds the above range, the ratio of the active material and the electrically conductive material in the positive electrode is relatively reduced and thus the battery capacity can be reduced. Therefore, it is preferable to determine an appropriate amount of the binder within the above-described range.

In the present invention, the method of manufacturing the positive electrode is not particularly limited, and a method known to a person skilled in the art or various methods modified therefrom may be used.

As an example, the positive electrode may be prepared by preparing a positive electrode slurry composition comprising the above-described components and then applying the positive electrode slurry composition to at least one surface of the positive electrode current collector.

The positive electrode slurry composition comprises the positive electrode active material, the conductive material, and the binder as described above, and may further comprise a solvent other than these.

As a solvent, a solvent capable of uniformly dispersing the positive electrode active material, the conductive material, and the binder is used. As such a solvent, water is most preferred as an aqueous solvent. At this time, water may be a distilled water or a deionzied water, but is not necessarily limited thereto, and if necessary, a lower alcohol which can be easily mixed with water may be used. Examples of the lower alcohol comprise methanol, ethanol, propanol, isopropanol, and butanol, and they may be preferably used in mixture with water.

The content of the solvent may be at a level of having such a concentration as to facilitate the coating, and the specific content varies depending on the coating method and apparatus.

The positive electrode slurry composition may additionally comprise, if necessary, a material commonly used for the purpose of improving its function in the relevant technical field. For example, a viscosity adjusting agent, a fluidizing agent, a filler, etc. are mentioned.

The method of applying the positive electrode slurry composition is not particularly limited in the present invention, and for example, methods such as doctor blade, die casting, comma coating, and screen printing may be mentioned. **In** addition, after molding on a separate substrate, the positive electrode slurry may be applied on the positive electrode current collector by pressing or lamination.

After the application, a drying process for removing the solvent may be performed. The drying process is carried out at a temperature and time at a level capable of sufficiently removing the solvent, and the conditions may vary depending on the type of solvent, and thus are not particularly limited in the present invention. As an example, a drying method by warm air, hot air, or low-humidity air, a vacuum drying method, and a drying method by irradiation with (far)-infrared radiation or electron beam may be mentioned. The drying speed is adjusted so that the solvent can be removed as quickly as possible within the range of speed that does not cause cracks in the positive electrode active material layer due to normal stress concentration or within the range of speed at which the positive electrode active material layer does not peel off from the positive electrode current collector.

Additionally, after the drying, the density of the positive electrode active material in the positive electrode may be increased by pressing the current collector. Methods, such as a mold press and a roll press, are mentioned as a press method.

The porosity of the positive electrode, specifically the positive electrode active material layer manufactured by the above-described components and manufacturing method, may be 40 to 80%, preferably 60 to 75%. When the porosity of the positive electrode is less than 40%, the degree of filling of the positive electrode slurry composition comprising the positive electrode active material, the electrically conductive material, and the binder becomes too high, so that the electrolyte cannot be maintained sufficiently to exhibit ion conduction and/or electric conduction between positive electrode active materials, thereby resulting in deterioration of the output characteristics or cycle characteristics of the battery and resulting in a problem that the overvoltage of the battery and the reduction in discharging capacity become severe. On the contrary, when the porosity of the positive electrode exceeds 80% and has an excessively high porosity, there is a problem that the physical and electrical connection with the current collector is lowered, resulting in a decrease in adhesion and difficulty in reaction, and there is a problem that the energy density of the battery may be lowered because the electrolyte is filled in the increased porosity. Therefore, the porosity is properly adjusted within the above range.

In addition, the loading amount of sulfur in the positive electrode according to the present invention, that is, the mass of sulfur per unit area in the positive electrode active material layer in the positive electrode may be 2 to 15 mg/cm², preferably 2.5 to 5 mg/cm².

The negative electrode may comprise a negative electrode current collector and a negative electrode active material layer applied to one or both surfaces of the negative electrode current collector. Also, the negative electrode may be a lithium metal plate.

The negative electrode current collector is for supporting the negative electrode active material layer, and is as described in the positive electrode current collector.

The negative electrode active material layer may comprise an conductive material, a binder, etc. in addition to the negative electrode active material. At this time, the conductive material and the binder are as described above.

The negative electrode active material may comprise a material capable of reversibly intercalating or de-intercalating lithium ion (Li⁺), a material capable of reacting with lithium ion to reversibly form lithium containing compounds, lithium metal, or lithium alloy.

The material capable of reversibly intercalating or de-intercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

The method of forming the negative electrode active material is not particularly limited, and a method of forming a layer or film commonly used in the art may be used. For example, methods such as compression, coating, and deposition may be used. **In** addition, a case, in which a thin film of metallic lithium is formed on a metal plate by initial charging after assembling a battery without a lithium thin film in the current collector, is also comprised in the negative electrode of the present invention.

The electrolyte is for causing an electrochemical oxidation or reduction reaction in the positive electrode and the negative electrode through them, and is as described above.

The injection of the electrolyte may be performed at an appropriate step in the manufacturing process of a lithium-sulfur battery depending on the manufacturing process and required physical properties of the final product. That is, it can be applied before assembling the lithium-sulfur battery or in the final stage of assembling.

A separator is additionally comprised between the positive electrode and the negative electrode.

The separator separates or insulates the positive electrode and the negative electrode from each other and enables lithium ions to be transported between the positive electrode and the negative electrode, and may be made of a porous non-conductive or insulating material. The separator may be used without particular limitation as long as it is used as a separator in a typical lithium-sulfur battery. The separator may be an independent member such as a film or a coating layer added to the positive electrode and/or the negative electrode.

As the separator, a separator with excellent impregnating ability for the electrolyte along with low resistance to ion migration in the electrolyte is preferable.

The separator may be made of a porous substrate. Any of the porous substrates can be used as long as it is a porous substrate commonly used in a lithium-sulfur battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in a lithium-sulfur battery. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenylene oxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole, and polyarylate.

The thickness of the porous substrate is not particularly limited, but may be 1 to 100 µm, preferably 5 to 50 µm. Although the thickness range of the porous substrate is not particularly limited to the above-mentioned range, when the thickness is excessively thinner than the lower limit described above, mechanical properties are deteriorated and thus the separator may be easily damaged during use of the battery.

The average size and porosity of the pores present in the porous substrate are also not particularly limited, but may be 0.001 µm to 50 µm and 10 to 95%, respectively.

In the case of the lithium-sulfur battery according to the present invention, it is possible to perform laminating or stacking and folding processes of the separator and the electrode, in addition to the winding process which is a general process.

The shape of the lithium-sulfur battery is not particularly limited, and may have various shapes such as a cylindrical type, a stacked type, and a coin type.

In addition, the present invention provides a battery module comprising the lithium-sulfur battery as a unit battery.

The battery module can be used as a power source for medium-sized and large-sized devices that require high temperature stability, long cycle characteristics, high capacity characteristics and the like.

Examples of the medium-sized and large-sized device may comprise a power tool that is powered by a battery powered motor; electric cars comprising an electric vehicle (EV), a hybrid electric vehicle (HEV), a plug-in hybrid electric vehicle (PHEV), and the like; an electric two-wheeled vehicle comprising an electric bike (E-bike) and an electric scooter (E-scooter); an electric golf cart; and a power storage system, but are not limited thereto.

### [Mode for Invention]

Hereinafter, preferred examples of the present invention will be described in order to facilitate understanding of the present invention. It will be apparent to those skilled in the art, however, that the following examples are illustrative of the present invention as set out in the appended claims.

### Example and Comparative Example

### [Example 1]

87.5% by weight of sulfur-carbon composite (S:C=75:25 (weight ratio)) as a positive electrode active material, 5.0% by weight of Denka Black as a conductive material, and 7.5% by weight of styrene butadiene rubber/carboxymethyl cellulose (SBR:CMC=70:30(weight ratio)) as a binder were mixed to prepare a positive electrode slurry composition.

The prepared positive electrode slurry composition was coated on an aluminum current collector having a thickness of 20 µm, dried at 100°C for 12 hours, and pressed with a roll press to prepare a positive electrode. At this time, the loading amount of the positive electrode active material was 3.7 mAh/cm² or less and the porosity of the positive electrode was 70%.

A lithium metal thin film having a thickness of 20 µm was used as a negative electrode.

0.75 M LiFSI and 1.0% by weight of lithium nitrate were dissolved in an organic solvent consisting of 2-methylfuran and dimethoxyethane (2-methylfuran:DME=1:2 (volume ratio)) to prepare a solution. Subsequently, propyl vinyl ether was added to the solution to prepare an electrolyte so that the content was 1.0% by weight based on a total of 100% by weight of the electrolyte.

The prepared positive electrode and negative electrode were positioned to face each other, and a polyethylene separator having a thickness of 16 µm and a porosity of 45% was interposed therebetween, and 70 µℓ of the previously prepared electrolyte was injected to prepare a lithium-sulfur battery.

### [Example 2]

A lithium-sulfur battery was manufactured in the same manner as in Example 1, except that butyl vinyl ether was used in the same amount instead of propyl vinyl ether.

### [Example 3]

A lithium-sulfur battery was manufactured in the same manner as in Example 1, except that when preparing the electrolyte, the content of propyl vinyl ether was changed to 5.0% by weight.

### [Example 4]

A lithium-sulfur battery was manufactured in the same manner as in Example 1, except that when preparing the electrolyte, 1.0% by weight of propyl vinyl ether was changed to 5.0% by weight of butyl vinyl ether.

### [Example 5]

A lithium-sulfur battery was manufactured in the same manner as in Example 1, except that when preparing the electrolyte, organic solvent consisting of 2-methylfuran and dimethoxyethane (2-methylfuran:DME=1:1 (volume ratio)) was used.

### [Comparative Example 1]

A lithium-sulfur battery was manufactured in the same manner as in Example 1, except that when preparing the electrolyte, propyl vinyl ether was not used.

### [Comparative Example 2]

A lithium-sulfur battery was manufactured in the same manner as in Example 1, except that when preparing the electrolyte, an organic solvent consisting of 2-methylfuran and dimethoxyethane (2-methylfuran:DME=1:1 (volume ratio)) was used and propyl vinyl ether was not used.

### Experimental Example 1. Evaluation of battery performance

The performance of the batteries manufactured in the Example and the Comparative Example was evaluated using a charging/discharging measuring device (LAND CT-2001A, manufactured by Wuhan company).

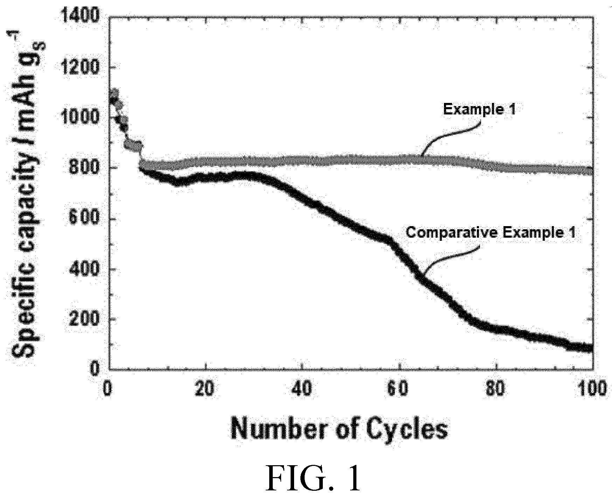

Specifically, discharging to 1.8 V at 0.1C at 25°C and charging to 2.5 V at 0.1C were repeated for the initial 2.5 cycles, and then charging/discharging at 0.2C/0.2C was performed for 3 cycles, and charging/discharging at 0.3C/0.5C was repeated up to 100 cycles to measure performance. The results obtained at this time were shown in Table 1 and FIGs. 1 to 6.

**Table 1:**

| | Discharging capacity per unit weight of positive electrode active material (mAh/g_{sulfur}@7^{th}) | Discharging capacity per unit weight of positive electrode active material (mAh/g_{sulfur}@50^{th}) | **Coulomb** efficiency (%@50^{th}) |
|---|---|---|---|
| Example 1 | 819 | 836 | 101.9148 |
| Example 2 | 846 | 907 | 101.1765 |
| Example 3 | 765 | 646 | 103.5621 |
| Example 4 | 771 | 671 | 102.3510 |
| Example 5 | 783 | 695 | 104.1258 |
| Comparative Example 1 | 763 | 577 | 104.4849 |
| Comparative Example 2 | 717 | 543 | 104.4624 |

As shown in FIGs. 1 to 6 and Table 1, it can be seen that in the case of batteries according to the Examples, the capacity and lifetime characteristics are superior to those of the Comparative Examples.

Specifically, referring to Table 1, it can be seen that the batteries of Examples 1 and 2 using an electrolyte containing an alkyl vinyl ether compound as an additive show about 7% and 11% higher capacity characteristics, respectively, compared to Comparative Example 1 at the 7^{th} cycle, and the difference increases further in the 50^{th} cycle. In addition, it can be seen that when the charging current is normal during operation of the battery, the coulomb efficiency represents a value close to 100%, and when the active material is lost due to lithium polysulfide, the charging capacity becomes larger than the discharging capacity, indicating a value far from 100%, but the batteries according to Examples 1 and 2 show values near 100% compared to the Comparative Examples, so the charging/discharging cycle characteristics are also excellent.

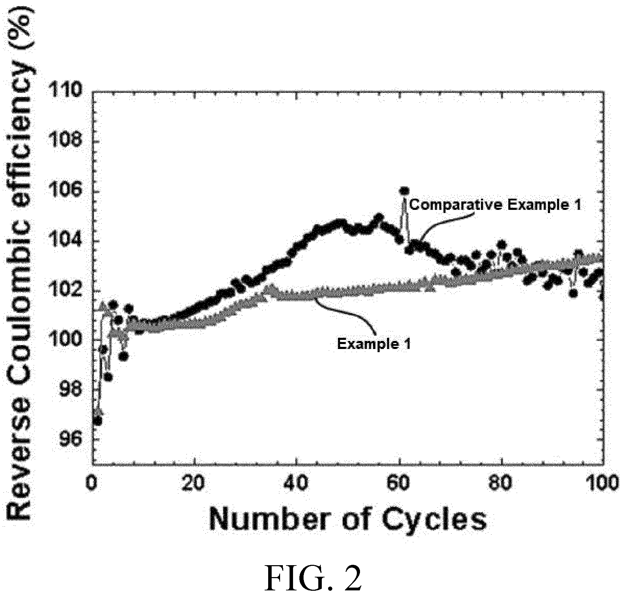

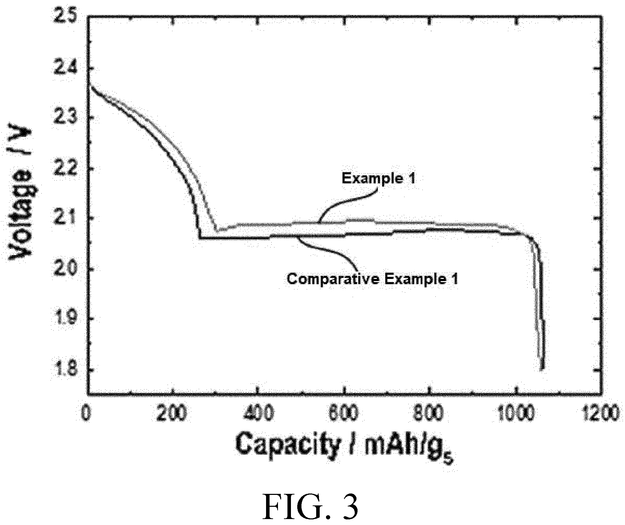

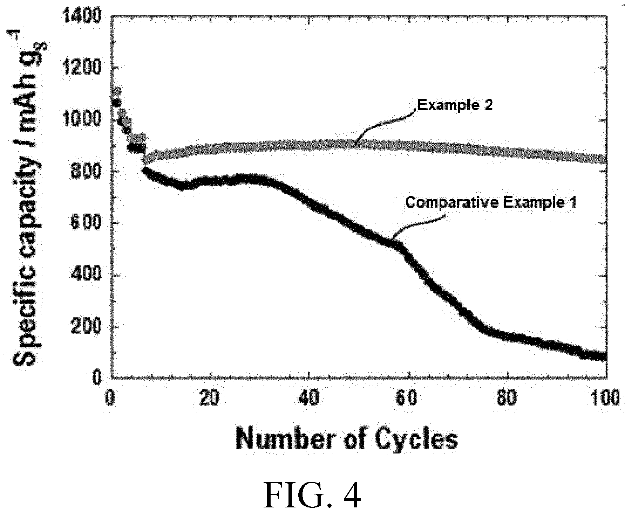

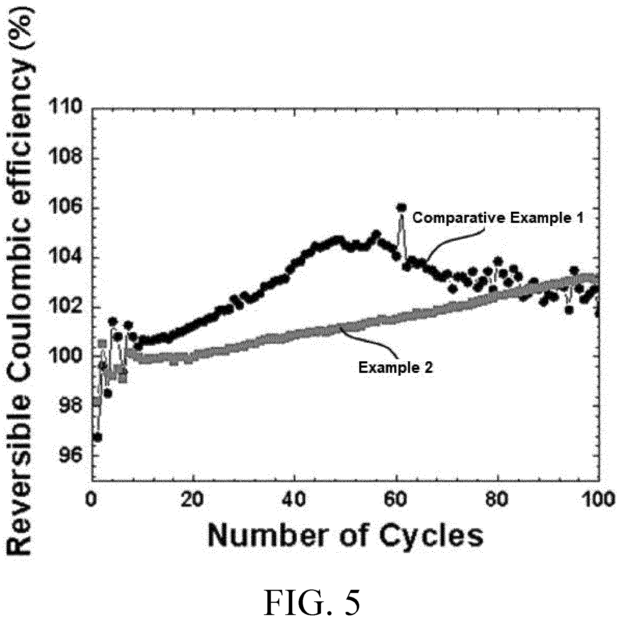

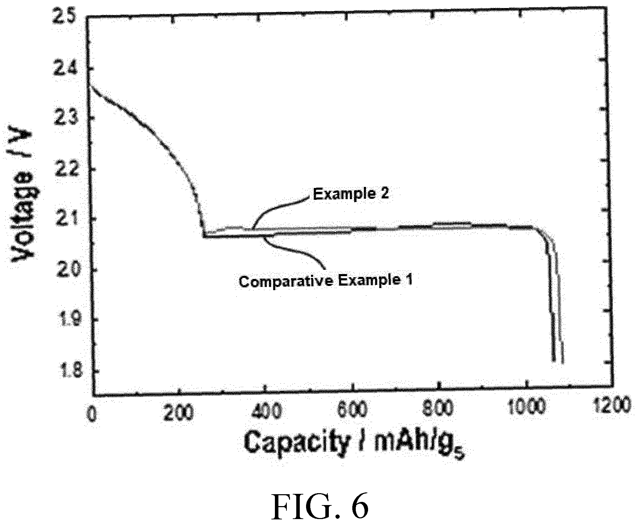

In addition, in the case of the batteries of Examples 1 and 2, it is confirmed from FIGs. 3 and 6 that overvoltage is improved during discharging, and from FIGs. 1 and 4 that the lifetime of the battery is improved, and from FIGs. 2 and 5 that as the cycle is proceeded, charging/discharging efficiency improves, and thus it can be seen that in the case of the batteries according to the present invention, improved capacity, lifetime, and charging/discharging efficiency are shown.

From these results, it can be seen that the lithium-sulfur battery of the present invention may improve capacity and lifetime characteristics of a lithium-sulfur battery by including an electrolyte containing an alkyl vinyl ether compound as an additive.

## Claims

1. An electrolyte for a lithium-sulfur battery comprising a lithium salt, a non-aqueous organic solvent, and an additive, wherein the additive comprises an alkyl vinyl ether compound, and wherein the non-aqueous organic solvent comprises an ether-based compound and a heterocyclic compound including one or more double bonds.

2. The electrolyte according to claim 1, wherein the alkyl vinyl ether compound is represented by Formula 1 below:
[Formula 1] H₂C=CH-OR
wherein R is an alkyl group having 1 to 10 carbon atoms.

3. The electrolyte according to claim 1, wherein the alkyl vinyl ether compound comprises at least one selected from the group consisting of methyl vinyl ether, ethyl vinyl ether, propyl vinyl ether, butyl vinyl ether, isobutyl vinyl ether, pentyl vinyl ether, and hexyl vinyl ether.

4. The electrolyte according to claim 1, wherein the ether-based compound comprises a linear ether compound.

5. The electrolyte according to claim 4, wherein the linear ether compound comprises at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

6. The electrolyte according to claim 1, wherein the heterocyclic compound includes at least one hetero atom selected from the group consisting of an oxygen atom and a sulfur atom.

7. The electrolyte according to claim 1, wherein the heterocyclic compound comprises at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene.

8. The electrolyte according to claim 1, wherein the non-aqueous organic solvent comprises the ether-based compound and the heterocyclic compound in a volume ratio of 95:5 to 5:95.

9. The electrolyte according to claim 1, wherein the lithium salt comprises at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate having 4 or less carbon atoms, lithium 4-phenyl borate, and lithium imide.

10. The electrolyte according to claim 1, wherein the alkyl vinyl ether compound is comprised in an amount of 0.1 to 10% by weight based on a total of 100% by weight of the electrolyte for the lithium-sulfur battery.

11. A lithium-sulfur battery comprising a positive electrode comprising a positive electrode active material; a negative electrode comprising a negative electrode active material; and an electrolyte according to claim 1.

12. The lithium-sulfur battery according to claim 11, wherein the positive electrode active material comprises at least one selected from the group consisting of elemental sulfur and a sulfur compound.

13. The lithium-sulfur battery according to claim 11, wherein the positive electrode active material comprises at least one selected from the group consisting of inorganic sulfur, Li₂Sₙ wherein n≥1, a disulfide compound, an organic sulfur compound, and a carbon-sulfur polymer (C₂Sₓ)ₙ wherein x=2.5 to 50 and n≥2.

14. The lithium-sulfur battery according to claim 11, wherein the negative electrode active material comprises at least one selected from the group consisting of lithium metal and lithium alloy.

## Patentansprüche

1. Elektrolyt für eine Lithium-Schwefel-Batterie, umfassend ein Lithiumsalz, ein nichtwässriges organisches Lösungsmittel und einen Zusatzstoff, wobei der Zusatzstoff eine Alkylvinyletherverbindung umfasst, und wobei das nichtwässrige organische Lösungsmittel eine Ether-basierte Verbindung und eine heterocyclische Verbindung mit einer oder mehreren Doppelbindungen umfasst.

2. Elektrolyt gemäß Anspruch 1, wobei die Alkylvinyletherverbindung durch die folgende Formel 1 dargestellt ist:
[Formel 1] H₂C=CH-OR
worin R eine Alkylgruppe mit 1 bis 10 Kohlenstoffatomen **ist.**

3. Elektrolyt gemäß Anspruch **1,** wobei die Alkylvinyletherverbindung mindestens eine umfasst, ausgewählt aus der Gruppe bestehend aus Methylvinylether, Ethylvinylether, Propylvinylether, Butylvinylether, Isobutylvinylether, Pentylvinylether und Hexylvinylether.

4. Elektrolyt gemäß Anspruch **1,** wobei die Ether-basierte Verbindung eine lineare Etherverbindung umfasst.

5. Elektrolyt gemäß Anspruch **4,** wobei die lineare Etherverbindung mindestens eine umfasst, ausgewählt aus der Gruppe bestehend aus Dimethylether, Diethylether, Dipropylether, Methylethylether, Methylpropylether, Ethylpropylether, Dimethoxyethan, Diethoxyethan, Ethylenglykolethylether, Diethylenglykoldimethylether, Diethylenglykoldiethylether, Diethylenglykolmethylethylether, Triethylenglykoldimethylether, Triethylenglykoldiethylether, Triethylenglykolmethylethylether, Tetraethylenglykoldimethylether, Tetraethylenglykoldiethylether, Tetraethylenglykolmethylethylether, Polyethylenglykoldimethylether, Polyethylenglykoldiethylether und Polyethylenglykolmethylethylether.

6. Elektrolyt gemäß Anspruch 1, wobei die heterocyclische Verbindung mindestens ein Heteroatom umfasst, ausgewählt aus der Gruppe bestehend aus einem Sauerstoffatom und einem Schwefelatom.

7. Elektrolyt gemäß Anspruch 1, wobei die heterocyclische Verbindung mindestens eine umfasst, ausgewählt aus der Gruppe bestehend aus Furan, 2-Methylfuran, 3-Methylfuran, 2-Ethylfuran, 2-Propylfuran, 2-Butylfuran, 2,3-Dimethylfuran, 2,4-Dimethylfuran, 2,5-Dimethylfuran, Pyran, 2-Methylpyran, 3-Methylpyran, 4-Methylpyran, Benzofuran, 2-(2-Nitrovinyl)furan, Thiophen, 2-Methylthiophen, 2-Ethylthiophen, 2-Propylthiophen, 2-Butylthiophen, 2,3-Dimethylthiophen, 2,4-Dimethylthiophen und 2,5-Dimethylthiophen.

8. Elektrolyt gemäß Anspruch 1, wobei das nichtwässrige organische Lösungsmittel die Ether-basierte Verbindung und die heterocyclische Verbindung in einem Volumenverhältnis von 95:5 bis 5:95 umfasst.

9. Elektrolyt nach Anspruch 1, wobei das Lithiumsalz mindestens eines umfasst, ausgewählt aus der Gruppe bestehend aus LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, (CF₃SO₂)₂NLi, (C₂F₅SO₂)₂NLi, (SO₂F)₂NLi, (CF₃SO₂)₃CLi, Lithiumchlorboran, Lithium-Carboxylat mit 4 oder weniger Kohlenstoffatomen, Lithium-4-phenylborat und Lithiumimid.

10. Elektrolyt gemäß Anspruch 1, wobei die Alkylvinyletherverbindung in einer Menge von 0,1 bis 10 Gewicht-%, bezogen auf insgesamt 100 Gewichts-% des Elektrolyten für die Lithium-Schwefel-Batterie, umfasst ist.

11. Lithium-Schwefel-Batterie, umfassend eine positive Elektrode, die ein Positivelektrodenaktivmaterial umfasst; eine negative Elektrode, die ein Negativelektrodenaktivmaterial umfasst; und einen Elektrolyten gemäß Anspruch 1.

12. Lithium-Schwefel-Batterie gemäß Anspruch 11, wobei das Positivelektrodenaktivmaterial mindestens eines umfasst, ausgewählt aus der Gruppe bestehend aus elementarem Schwefel und einer Schwefelverbindung.

13. Lithium-Schwefel-Batterie gemäß Anspruch 11, wobei das Positivelektrodenaktivmaterial mindestens eines umfasst, ausgewählt aus der Gruppe bestehend aus anorganischem Schwefel, Li₂Sₙ, worin n ≥ 1, einer Disulfidverbindung, einer organischen Schwefelverbindung und einem Kohlenstoff-Schwefel-Polymer (C₂Sₓ)ₙ, worin x = 2,5 bis 50 und n ≥ 2.

14. Lithium-Schwefel-Batterie gemäß Anspruch 11, wobei das Negativelektrodenaktivmaterial mindestens eines umfasst, ausgewählt aus der Gruppe bestehend aus Lithiummetall und Lithiumlegierung.

## Revendications

1. Électrolyte pour une batterie au lithium-soufre comprenant un sel de lithium, un solvant organique non aqueux et un additif, dans lequel l'additif comprend un composé d'éther vinylique d'alkyle, et dans lequel le solvant organique non aqueux comprend un composé à base d'éther et un composé hétérocyclique incluant une ou plusieurs doubles liaisons.

2. Électrolyte selon la revendication 1, dans lequel le composé d'éther vinylique d'alkyle est représenté par la formule 1 ci-dessous :
[Formule 1] H₂C=CH-OR
dans lequel R est un groupe alkyle présentant 1 à 10 atomes de carbone.

3. Électrolyte selon la revendication 1, dans lequel le composé d'éther vinylique d'alkyle comprend au moins l'un sélectionné dans le groupe consistant en un éther méthylvinylique, un éther éthylvinylique, un éther propylvinylique, un éther butylvinylique, un éther isobutylvinylique, un éther pentylvinylique et un éther hexylvinylique.

4. Électrolyte selon la revendication 1, dans lequel le composé à base d'éther comprend un composé d'éther linéaire.

5. Électrolyte polymère selon la revendication 4, dans lequel le composé d'éther linéaire comprend au moins l'un sélectionné dans le groupe consistant en un éther diméthylique, un éther diéthylique, un éther dipropylique, un éther méthyléthylique, un éther méthylpropylique, un éther éthylpropylique, un diméthoxyéthane, un diéthoxyéthane, un éther éthylméthylique d'éthylène glycol, un éther diméthylique de diéthylène glycol, un éther diéthylique de diéthylène glycol, un éther méthyléthylique de diéthylène glycol, un éther diméthylique de triéthylène glycol, un éther diéthylique de triéthylène glycol, un éther méthyléthylique de triéthylène glycol, un éther diméthylique de tétraéthylène glycol, un éther diéthylique de tétraéthylène glycol, un éther méthyléthylique de tétraéthylène glycol, un éther diméthylique de polyéthylène glycol, un éther diéthylique de polyéthylène glycol et un éther méthyéthylique de polyéthylène glycol.

6. Électrolyte selon la revendication 1, dans lequel le composé hétérocyclique inclut au moins un hétéroatome sélectionné dans le groupe consistant en un atome d'oxygène et un atome de soufre.

7. Électrolyte selon la revendication 1, dans lequel le composé hétérocyclique comprend au moins l'un sélectionné dans le groupe consistant en un furane, un 2-méthylfurane, un 3-méthylfurane, un 2-éthylfurane, un 2-propylfurane, un 2-butylfurane, un 2,3-diméthylfurane, un 2,4-diméthylfurane, un 2,5-diméthylfurane, un pyrane, un 2-méthylpyrane, un 3-méthylpyrane, un 4-méthylpyrane, un benzofurane, un 2-(2-nitrovinyl)furane, un thiophène, un 2-méthylthiophène, un 2-éthylthiophène, un 2-propylthiophène, un 2-butylthiophène, un 2,3-diméthylthiophène, un 2,4-diméthylthiophène et un 2,5-diméthylthiophène.

8. Électrolyte selon la revendication 1, dans lequel le solvant organique non aqueux comprend le composé à base d'éther et le composé hétérocyclique dans un rapport volumique de 95:5 à 5:95.

9. Électrolyte selon la revendication 1, dans lequel le sel de lithium comprend au moins l'un sélectionné dans le groupe consistant en LiCl, LiBr, Lil, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, (CF₃SO₂)₂NLi, (C₂F₅SO₂)₂NLi, (SO₂F)₂NLi, (CF₃SO₂)₃CLi, un chloroborane de lithium, un carboxylate aliphatique inférieur de lithium présentant 4 atomes de carbone ou moins, un borate 4-phényle de lithium et un imide de lithium.

10. Électrolyte selon la revendication 1, dans lequel le composé d'éther vinylique d'alkyle est compris en une quantité de 0,1 à 10 % en poids sur la base d'un total de 100 % en poids de l'électrolyte pour la batterie au lithium-soufre.

11. Batterie au lithium-soufre comprenant une électrode positive comprenant un matériau actif d'électrode positive ; une électrode négative comprenant un matériau actif d'électrode négative ; et un électrolyte selon la revendication 1.

12. Batterie au lithium-soufre selon la revendication 11, dans laquelle le matériau actif d'électrode positive comprend au moins l'un sélectionné dans le groupe consistant en un soufre élémentaire et un composé de soufre.

13. Batterie au lithium-soufre selon la revendication 11, dans laquelle le matériau actif d'électrode positive comprend au moins l'un sélectionné dans le groupe consistant en un soufre inorganique, Li₂Sₙ dans laquelle n ≥ 1, un composé disulfure, un composé organosoufré et un polymère carbone-soufre (C₂Sₓ)ₙ dans laquelle x = 2,5 à 50 et n ≥ 2.

14. Batterie au lithium-soufre selon la revendication 11, dans laquelle le matériau actif d'électrode négative comprend au moins l'un sélectionné dans le groupe consistant en un métal de lithium et un alliage de lithium.
